# EUROPEAN PATENT SPECIFICATION

(11) **EP 1 960 093 B1**
(45) Date of publication and mention of the grant of the patent: **08.04.2009**
(21) Application number: 06808547.1
(22) Date of filing: 15.11.2006
(51) Int. Cl.: B01F 11/00

(54) **APPARATUS AND METHOD FOR APPLYING OSCILLATORY MOTION**
VORRICHTUNG UND VERFAHREN ZUM ANLEGEN EINER SCHWINGBEWEGUNG
APPAREIL ET PROCÉDÉ POUR APPLIQUER UN MOUVEMENT OSCILLATOIRE

(30) Priority: 15.11.2005 GB 0523245
(43) Date of publication of application: 27.08.2008
(73) Proprietor: Nitech Solutions Limited, East Kilbride, Glasgow G75 0QF (GB)
(72) Inventor: NI, Xiongwei, Edinburgh EH4 3LG (GB); FITCH, Andrew, Lanarkshire ML6 8BG (GB); LAIRD, Ian, Glasgow G77 5FF (GB)
(74) Representative: D'Arcy, Julia
(86) International application number: PCT/GB2006/004257
(87) International publication number: WO 2007/057661

(56) References cited:
- EP-A- 0 631 809
- EP-A1- 0 540 180
- DE-B- 1 046 581
- DE-B- 1 057 579
- GB-A- 2 276 559
- US-A1- 3 330 535
- US-A1- 4 983 045
- FITSCH A W ET AL: "USING NON-INTRUSIVE LASER-INDUCED FLUORESCENCE IN THE CHARACTERISATION OF MIXING IN AN OSCILLATORY BAFFLED COLUMN" JOURNAL OF CHEMICAL TECHNOLOGY AND BIOTECHNOLOGY, WILEY & SONS, CHICHESTER, GB, vol. 78, no. 2/3, February 2003 (2003-02), pages 326-331, XP001145051 ISSN: 0268-2575

## Description

The present invention relates to an improved apparatus and method for applying oscillatory motion.

Oscillatory motion is of particular importance in many processes that are dependant on mixing. For example, the oscillatory motion produced and applied when using mixing in the chemical, petroleum, process, pharmaceutical, bioscience, bioengineering, food and associated industries can be critical on the process taking place and the final product obtained. In particular, the use of oscillatory baffled apparatus can be beneficial for carrying out mixing processes in these industries. Such an apparatus is disclosed in GB-A-2276559.

Currently, oscillation is imparted on the contents of an oscillatory baffled apparatus using an oscillator unit comprising an oscillator and a drive unit. These are essential in order to convert rotary motion from a motor into a reciprocating linear motion. The linear motion is then imparted on the contents of the oscillatory baffled apparatus to generate uniform mixing of liquid-liquid, gas-liquid and solid-liquid species.

The degree of mixing in oscillatory baffled apparatus can be controlled by fine tuning oscillation frequency and oscillation amplitude, using a pre-selected baffle type, and a predetermined baffle spacing and restriction area. The oscillator unit commonly comprises a motor, an inverter and a flywheel arrangement. The motor and inverter provide the rotary motion, and also the frequency of oscillation, which is typically 0.5 to 10 Hz. Various types of pneumatic, hydraulic, magnetic and mechanical motors have been used as the oscillator unit in oscillatory baffled apparatus. Rotary motion can be converted to reciprocating linear motion via the bell house linkage on a flywheel, or a moving rod on a converging cone. The oscillation amplitudes so created can be changed by adjusting the eccentric position of the bell house linkage on the flywheel off-line, or by moving the linkage rod on the rotating cone on-line.

However, present apparatus available for carrying out such processes suffers from several drawbacks and disadvantages. For example, the oscillator unit arrangements have obvious limitations in that the determination of oscillation amplitude is inaccurate. Moreover, a "stop, change and start" operational protocol must be employed for changing oscillation amplitude when using a flywheel arrangement. That is, whenever the amplitude of oscillation is changed, the process in hand must be stopped and the eccentric position of the bell house link on the flywheel must be manually adjusted.

Moreover, present apparatus is restricted to imparting sinusoidal oscillatory motion only.

Therefore it is an object of the present invention to overcome at least some of the drawbacks associated with the prior art.

According to a first aspect of the present invention there is provided an apparatus for applying oscillatory motion to at least one substance within a vessel, the apparatus comprising:
at least one member for applying motion to the at least one substance; and
a control means adapted to control the movement of
the at least one member
wherein the movement of the at least one member is determined by a control signal generated by the control means.

According to a second aspect of the present invention there is provided an apparatus for applying oscillatory motion to at least one substance within a vessel, the apparatus comprising:
a vessel;
at least one baffle extending inwards from the side of the vessel;
at least one member for applying motion to the at least one substance; and
a control means adapted to control the movement of the at least one member
wherein the movement of the at least one member is determined by a control signal generated by the control means.

The control signal is generated in accordance with at least one predetermined waveform.

Optionally the control signal has a first predetermined waveform and the control means is adapted to switch the control signal to a second alternative waveform.

The waveform describes the control signal output which is applied to the at least one member.

The vessel may be closed at one or both ends to allow processing of substances in batches, or may be open at both ends to allow continuous processing of substances.

Optionally at least part of the at least one member is moveably located within the vessel.

Alternatively the at least one member operates on a diaphragm or bellows or a piston arrangement connected to the vessel.

The substance can be a mixture of miscible or immiscible fluids; a reaction mixture of a chemical reaction; a dispersion, suspension, emulsion or micro-emulsion; or any other suitable material with at least some fluid properties.

The apparatus of the present invention facilitates the alteration of the control signal waveform, and therefore the type of linear motion of the reciprocating means. Consequently, the mixing imparted on the contents of the apparatus is modifiable without interrupting the process that is being performed. The control signal waveform can be square wave, triangular wave, sinusoidal, irregular or any type of waveform.

Furthermore, the oscillation amplitude can be increased or decreased without the "stop, change and start" protocol and the oscillation frequency and amplitude can be altered simultaneously or independently.

Preferably the at least one member is an actuator.

More preferably, the actuator is a reciprocating linear actuator.

The actuator can comprise a reciprocating shaft.

Optionally the actuator further comprises a piston attached to the reciprocating shaft.

The apparatus may further comprise at least one baffle set.

The at least one baffle set may be attached to a reciprocating shaft so forming an actuator.

The baffle set may have a plurality of annular baffles, which may be joined together by rails in a substantially equidistant manner, and arranged substantially in parallel, such that they extend radially inwards from the side of the vessel. In a batch oscillatory apparatus, the last baffle in a baffle set is the baffle closest to the base of the batch apparatus. The baffle set may form part of the actuator or can be static, fixed to the inside of the vessel.

Preferably the control means is a servo amplifier.

More preferably the control means is a digital servo amplifier.

The control means affords the user complete control over the control signal, and thus type of waveform imparted on the reciprocating means (i.e. sinusoidal, square-wave, triangular-wave, irregular wave). The control means accurately controls the position of the shaft within the actuator, and therefore controls the oscillation. The control means can therefore generate various forms of reciprocating motion that are subsequently executed by the actuator, imparting programmed motion on the substance in the apparatus.

The actuator and the control means are combined to form an oscillator unit.

According to a third aspect of the present invention there is provided a method for applying oscillatory motion to at least one substance within a vessel using at least one member, the method comprising the steps of:
generating a control signal having a controllable waveform;
applying the control signal to the at least one member; and
moving the at least one member to apply oscillatory motion to the at least one substance
wherein the movement of the at least one member is determined by the control signal.

According to a fourth aspect of the present invention there is provided a method of mixing at least one substance within a vessel using at least one member, the method comprising the steps of:
generating a control signal having a controllable waveform;
applying the control signal to the at least one member; and
moving the at least one member to apply oscillatory
motion to the at least one substance
wherein the movement of the at least one member is determined by the control signal.

Preferably the method comprises the further step of switching the control signal applied to the at least one member to an alternative controllable waveform to apply an alternative oscillatory motion to the at least one substance.

The control signal can be switched to an alternative waveform in response to conditions within the vessel.

Optionally the control signal is adapted to produce a waveform that is substantially sinusoidal.

Alternatively the control signal is adapted to produce a waveform that is substantially square wave.

A further alternative is that the control signal is adapted to produce a waveform that is substantially triangular wave.

A still further alternative is that the control signal is adapted to produce a waveform that is irregular.

The control signal can be adapted to produce a waveform with constant or variable amplitude.

The control signal can be adapted to produce a waveform with constant or variable frequency.

The control signal can be adapted to produce a waveform with constant or variable period.

Preferably, on adjustment of the amplitude in a batch apparatus comprising a last baffle, the last baffle is automatically realigned in relation to the bottom of the apparatus. This can be carried out prior to the start of operation, using a pre-set peak-to-peak amplitude method to determine a reference position.

The at least one member can be set to a predetermined position prior to the start of operation.

In a continuous oscillatory baffled reactor the actuator automatically squeezes the bellows so that flushing can be carried out to remove air or impurity within the continuous oscillatory baffled reactor. In batch oscillatory baffled reactors where the baffles are stationary, the squeezing also takes place, prior to the start of operation.

The present invention will now be described by way of example only, with reference to the accompanying drawings
in which:
Figure 1 shows a schematic representation of a continuous oscillatory baffled apparatus; and
Figure 2 shows a schematic representation of a batch oscillatory baffled apparatus.

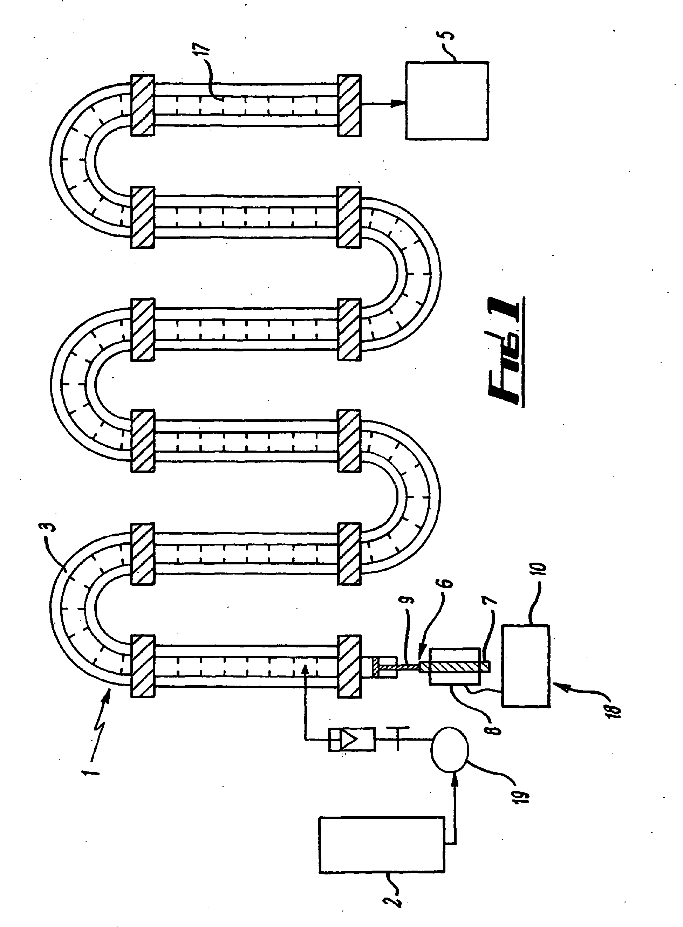

Referring to Figure 1, in this embodiment of the invention there is illustrated a continuous oscillatory baffled apparatus 1, with a serpentine flowpath. The oscillatory baffled apparatus 1 is shrouded by a heat removal jacket 3. Inside the oscillatory baffled apparatus 1 are annular baffles 17 that extend radially inwards from the sides of the oscillatory baffled apparatus 1. Attached to the oscillatory baffled apparatus 1 is an oscillator unit 18. At one end of the oscillatory baffled apparatus 1 there is connected a feed tank 2 and pump 19. At the other end of the oscillatory baffled apparatus there is connected a product tank 5.

The oscillator unit 18 comprises an actuator 6 which is made of a magnetic substance such as iron, and which constitutes a movable cylindrical shaft 7 connected to a cylindrical piston 9. The cylindrical shaft 7 is housed in a housing case 8. The movable cylindrical shaft 7 is longer than the dimensions of the housing case 8 with which its longest dimension is aligned so that the movable cylindrical shaft 7 moves in and out of both ends of the housing case 8.

In this example the actuator incorporates an IP67 rated forcer and.a sealed stainless steel thrust rod enclosing rare-earth magnets, delivering a continuous force range of 100 ∼ 300 N with peak forces up to 1800 N, and stroke lengths from 20 to 320 mm. The oscillation unit can comprise any reciprocally movable shaft suitable for imparting linear motion, and any housing case suitable for housing said movable shaft. It will be appreciated that the actuator can also work by way of pneumatics or hydraulics.

The actuator acts as a member for applying motion to the contents of the vessel, and contains a reciprocating shaft attached to a piston. The reciprocating shaft could alternatively be attached to a baffle set.

The actuator 6 is controlled by a control box 10 in which a servo amplifier (not shown), together with an electronic assembly (not shown), are co-located. The control box 10 can be located close to the actuator 6 or remote from it.

In this example the control box acts as control means and incorporates a digital servo amplifier, which gives complete digital control of brushless or brush motors in an off-line powered package. It also accurately dictates the position of the shaft within the actuator and generates and executes various forms of reciprocating motions. The digital servo amplifier operates as a motion control device and a control signal generator; with a 16-position rotary switch for programming. In this example, the control box is connected to the actuator via a 5-pin socket for power supply and a 9-pin parallel connector for programming.

The control box offers an easy to use button press means for changing oscillation amplitude. The oscillation amplitude can be determined to 230 µm accuracy, and with 10 µm repeatability. The control box eliminates the need for the traditional "stop, change and.start" operational protocol that has been used previously for apparatus with a bell house linkage on a flywheel.

A liquid phase containing a first reactant is pumped into the continuous oscillatory baffled apparatus 1 from a feed tank 2. Further reactants are added sequentially, downstream from the addition of the first reactant. A reaction takes place along the length of the apparatus 1 with heat removal by the jackets 3 containing a coolant. Oscillation is provided by the oscillation unit 18. The product is continuously produced and discharged to the product tank 5.

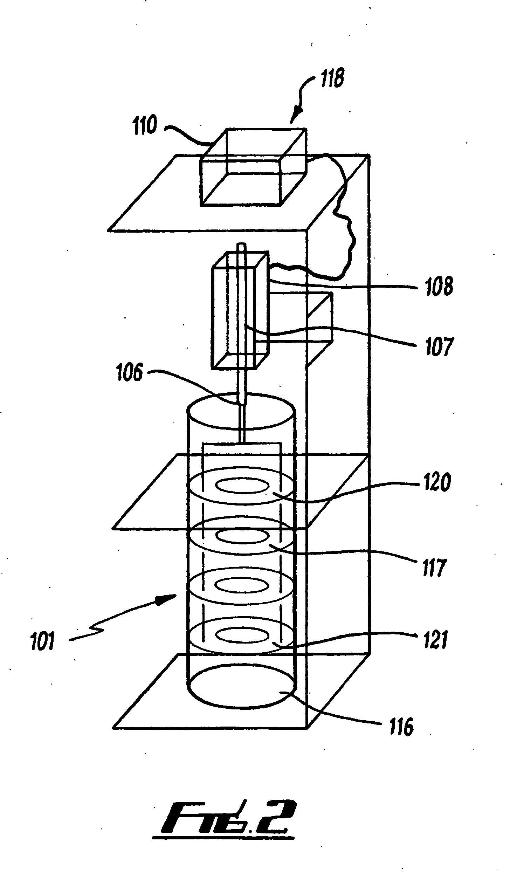

Referring now to Figure 2, in an alternative embodiment of the invention there is illustrated a batch oscillatory baffled apparatus 101. Inside the oscillatory baffled apparatus 101 are annular baffles 117 that extend radially inwards from the sides of the oscillatory baffled apparatus 101. Attached to the oscillatory baffled apparatus 101 is an oscillator unit 118. The oscillator unit 118 comprises an actuator 106 which constitutes a movable shaft 107 connected to a baffle set 120. The movable shaft 107 is housed in a housing case 108. The baffle that is furthest from the actuator 106, and closest to the bottom 116 of the oscillatory baffled apparatus 101, is the last baffle 121.

Automatic realignment of the location of last baffle in relation to the bottom of a batch oscillatory baffled apparatus vessel can be performed for any chosen oscillation amplitude.

The actuator 106 is controlled by a control box 110 in which a servo amplifier (not shown), together with an electronic assembly (not shown), are co-located.

In this embodiment, the oscillator unit 118 provides the reciprocating motion for the baffle set 120. This oscillation generates the uniform mixing of fluids in the batch oscillatory baffled apparatus 101. A control box 110 can be located either close to the actuator 106 or remote from it. The oscillation unit 118 also automatically adjusts the position of the last baffle 121 in the baffle set 120 in relation to the bottom 116 of the batch oscillatory baffled apparatus 101 for any given oscillation amplitude, ensuring a regular distance between the last baffle 121 and the bottom 116 of the oscillatory baffled apparatus 101. The last baffle 121 can be moved independently of, or in unison with, the remaining baffles 117 in the baffle set 120. ,

This automated adjustment provides consistent fluid mechanical conditions within the batch oscillatory baffled apparatus for any amplitude and eliminates the "stop, change and start" operational protocol that has previously been necessary for apparatus with a bell house linkage on a flywheel.

It is desirable to have optimal spacing between the last baffle and the bottom of the oscillatory baffled apparatus to ensure optimal eddy motion. If the distance between the last baffle and the bottom of the apparatus is too large, then the eddies generated in this part of the apparatus will not be strong enough to provide uniform mixing. For example, if the apparatus contains a solid suspended in a fluid, the solid may settle towards the bottom of the apparatus. Similarly, if the distance between the last baffle and the bottom of the apparatus is too small, then the eddies generated in this part of the apparatus will be too strong to provide uniform mixing. Both of these situations result in a mixing gradient, which is undesirable.

In further alternative embodiments the vessel contains a diaphragm, or bellows, or a piston arrangement at one end. The baffle set is stationary within the vessel and the actuator periodically acts on the diaphragm, bellows or piston arrangement to create oscillatory motion and/or mixing within the vessel.

Use of the apparatus of Figure 2 will now be described with reference to the flocculation process in waste water treatment. In this operation, wastewater of a known amount is charged into the batch oscillatory baffled apparatus, and mixing takes place by reciprocating the baffle set using the oscillation unit. Charged polymers are then added to the apparatus.

Traditionally a short period of high mixing intensity is required to uniformly disperse the polymer particles in wastewater, and is then followed by a longer period of low mixing intensity in order to allow charged polymer particles to "grab" wastes contained in solution to form flocs that are large enough to settle and be.separated from the vessel.

In the apparatus of the prior art, this can only be done by changing the motor rotary motion, and hence altering the oscillation frequency in the oscillatory baffled apparatus. However, it is impracticable to alter the oscillation amplitude and examine the effect of changing oscillation amplitude on the flocculation rate, as this would involve a "stop, change and start" protocol. Furthermore, it is impossible to alter the form of the reciprocating motion and investigate the effect of the types of the oscillatory motion on the flocculation rate using the apparatus of the prior art.

In contrast, using the apparatus of the present invention, this process can be easily achieved through the following routes: changing the oscillation frequency at a fixed oscillation amplitude; changing the oscillation amplitude at a fixed frequency, which has not previously been practical; changing both the oscillation frequency and amplitude simultaneously or independently, which was not previously feasible; using different types of reciprocating waveform, which was previously impossible; using a sinusoidal form as is known, but having variable amplitudes and variable frequencies simultaneously or independently, which was not previously achievable; and optimising the reciprocating wave form for this process, which again was not previously possible.

The apparatus of the present invention enables any form of reciprocating motion to be generated and executed, including sinusoidal, square wave, triangle wave and irregular wave. The form of oscillatory motion has a significant effect on the degree of mixing achieved in oscillatory baffled apparatus and, in turn, the consistency and quality of the final products.

The apparatus has the ability to generate any desired form of reciprocating motion and to switch between different types of reciprocating motion in oscillatory baffled apparatus; this was not previously possible. Thus, the improved apparatus and method for applying oscillatory motion offers substantially greater control over the processes and products that can be performed and obtained from oscillatory baffled apparatus.

The method and apparatus have applications in providing improved mixing. In particular, the method and apparatus enable different mixing patterns to be applied to a substance in a vessel.

## Claims

1. An apparatus for applying oscillatory motion to at least one substance within a vessel, the apparatus comprising:
at least one member for applying motion to the at least one substance; and
a control means adapted to control the movement of the at least one member
wherein the movement of the at least one member is determined by a control signal generated by the control means, and wherein the control signal is generated in accordance with at least one predetermined waveform.

2. An apparatus as described in Claim 1, wherein the apparatus further comprises a vessel having at least one baffle extending inwards from the side thereof.

3. An apparatus as described in Claims 1 or 2, wherein the control signal has a first predetermined waveform and wherein the control means is adapted to switch the control signal to a second alternative waveform.

4. An apparatus as described in any preceding Claim, wherein at least part of the at least one member is moveably located within the vessel.

5. An apparatus as described in any preceding Claim, wherein the at least one member is a reciprocating linear actuator.

6. An apparatus as described in any preceding Claim, wherein the apparatus further comprises at least one baffle set.

7. An apparatus as described in Claim 6, wherein the at least one baffle set is attached to a reciprocating shaft so forming an actuator.

8. An apparatus as described in Claims 6 or 7, wherein the at least one baffle set comprises a plurality of annular baffles, joined together by rails in a substantially equidistant manner, and arranged substantially in parallel, such that they extend radially inwards from the side of the vessel.

9. An apparatus as described in any preceding Claim, wherein the control means is a servo amplifier.

10. A method for applying oscillatory motion to at least one substance within a vessel using at least one member, the method comprising the steps of:
generating a control signal having a controllable predetermined waveform;
applying the control signal to the at least one member; and moving the at least one member to apply oscillatory motion to the at least one substance
wherein the movement of the at least one member is determined by the control signal.

11. A method as described in Claim 10, comprising the further step of switching the control signal applied to the at least one member to an alternative controllable waveform to apply an alternative oscillatory motion to the at least one substance.

12. A method as described in Claim 11, wherein the control signal is switched to an alternative waveform in response to conditions within the vessel.

13. A method as described in Claims 10 to 12, wherein the control signal can be adapted to produce a waveform with constant or variable amplitude.

14. A method as described in Claims 10 to 13, wherein the control signal can be adapted to produce a waveform with constant or variable frequency.

15. A method as described in Claims 10 to 14, wherein the control signal can be adapted to produce a waveform with constant or variable period.

16. A method as described in Claims 10 to 15, wherein on adjustment of the amplitude in a batch apparatus comprising a last baffle, the last baffle is automatically realigned in relation to the bottom of the apparatus.

## Patentansprüche

1. Eine Vorrichtung zum Übertragen einer Schwingbewegung auf mindestens eine Substanz in einem Behälter, wobei die Vorrichtung Folgendes beinhaltet:
mindestens ein Element zum Übertragen von Bewegung auf die mindestens eine Substanz; und
ein Steuermittel, das angepasst ist, um die Bewegung des mindestens einen Elements zu steuern,
wobei die Bewegung des mindestens einen Elements durch ein Steuersignal festgelegt wird, das von dem Steuermittel erzeugt wird, und wobei das Steuersignal gemäß mindestens einer zuvor festgelegten Wellenform erzeugt wird.

2. Vorrichtung gemäß Anspruch 1, wobei die Vorrichtung ferner einen Behälter beinhaltet, der mindestens eine Ablenkplatte aufweist, die sich von dessen Seite nach innen erstreckt.

3. Vorrichtung gemäß Anspruch 1 oder 2, wobei das Steuersignal eine erste, zuvor festgelegte Wellenform aufweist und wobei das Steuermittel angepasst ist, um das Steuersignal zu einer zweiten, alternativen Wellenform zu wechseln.

4. Vorrichtung gemäß einem der vorhergehenden Ansprüche, wobei mindestens ein Teil des mindestens einen Elements innerhalb des Behälters beweglich angeordnet ist.

5. Vorrichtung gemäß einem der vorhergehenden Ansprüche, wobei das mindestens eine Element ein hin- und hergehender linearer Aktor ist.

6. Vorrichtung gemäß einem der vorhergehenden Ansprüche, wobei die Vorrichtung ferner mindestens einen Ablenkplattensatz beinhaltet.

7. Vorrichtung gemäß Anspruch 6, wobei der mindestens eine Ablenkplattensatz an einem hin- und hergehenden Schaft angebracht ist und so einen Aktor bildet.

8. Vorrichtung gemäß Anspruch 6 oder 7, wobei der mindestens eine Ablenkplattensatz eine Vielzahl von ringförmigen Ablenkplatten beinhaltet, die durch Schienen auf eine im Wesentlichen äquidistante Weise zusammengefügt und im Wesentlichen parallel angeordnet sind, so dass sie sich von der Seite des Behälters radial nach innen erstrecken.

9. Vorrichtung gemäß einem der vorhergehenden Ansprüche, wobei das Steuermittel ein Servoverstärker ist.

10. Ein Verfahren zum Übertragen einer Schwingbewegung auf mindestens eine Substanz innerhalb eines Behälters unter Verwendung mindestens eines Elements, wobei das Verfahren die folgenden Schritte beinhaltet:
Erzeugen eines Steuersignals, das eine steuerbare, zuvor festgelegte Wellenform aufweist;
Übertragen des Steuersignals auf das mindestens eine Element; und
Bewegen des mindestens einen Elements, um eine Schwingbewegung auf die mindestens eine Substanz zu übertragen,
wobei die Bewegung des mindestens einen Elements durch das Steuersignal festgelegt wird.

11. Verfahren gemäß Anspruch 10, das ferner den Schritt des Wechseln des Steuersignals, das auf das mindestens eine Element übertragen wird, zu einer alternativen, steuerbaren Wellenform beinhaltet, um eine alternative Schwingbewegung auf die mindestens eine Substanz zu übertragen.

12. Verfahren gemäß Anspruch 11, wobei das Steuersignal als Antwort auf Bedingungen innerhalb des Behälters zu einer alternativen Wellenform gewechselt wird.

13. Verfahren gemäß den Ansprüchen 10 bis 12, wobei das Steuersignal angepasst werden kann, um eine Wellenform mit einer konstanten oder einer variablen Amplitude zu produzieren.

14. Verfahren gemäß den Ansprüchen 10 bis 13, wobei das Steuersignal angepasst werden kann, um eine Wellenform mit einer konstanten oder einer variablen Frequenz zu produzieren.

15. Verfahren gemäß den Ansprüchen 10 bis 14, wobei das Steuersignal angepasst werden kann, um eine Wellenform mit einer konstanten oder einer variablen Periode zu produzieren.

16. Verfahren gemäß den Ansprüchen 10 bis 15, wobei bei Einstellung der Amplitude in einer Chargenprozessvorrichtung, die eine letzte Ablenkplatte beinhaltet, die letzte Ablenkplatte automatisch in Bezug auf den Boden der Vorrichtung neu ausgerichtet wird.

## Revendications

1. Un appareil pour appliquer un mouvement oscillatoire sur une substance au moins à l'intérieur d'un récipient, l'appareil comprenant :
au moins un élément destiné à appliquer le mouvement sur cette au moins une substance ; et
un moyen de commande adapté pour commander le déplacement de cet au moins un élément
dans lequel le déplacement de cet au moins un élément est déterminé par un signal de commande généré par le moyen de commande, et dans lequel le signal de commande est généré conformément à au moins une forme d'onde prédéterminée.

2. Un appareil tel que décrit dans la revendication 1, dans lequel l'appareil comprend de plus un récipient présentant au moins un déflecteur qui s'étend vers l'intérieur depuis le côté de celui-ci.

3. Un appareil tel que décrit dans les revendications 1 ou 2, dans lequel le signal de commande a une première forme d'onde prédéterminée et dans lequel le moyen de commande est adapté pour faire basculer le signal de commande vers une deuxième forme d'onde alternative.

4. Un appareil tel que décrit dans n'importe quelle revendication précédente, dans lequel au moins une partie de cet au moins un élément est située de façon à pouvoir se déplacer à l'intérieur du récipient.

5. Un appareil tel que décrit dans n'importe quelle revendication précédente, dans lequel cet au moins un élément est un actionneur linéaire animé d'un mouvement de va-et-vient.

6. Un appareil tel que décrit dans n'importe quelle revendication précédente, dans lequel l'appareil comprend de plus au moins un jeu de déflecteurs.

7. Un appareil tel que décrit dans la revendication 6, dans lequel cet au moins un jeu de déflecteurs est attaché à un arbre animé d'un mouvement de va-et-vient formant ainsi un actionneur.

8. Un appareil tel que décrit dans les revendications 6 ou 7, dans lequel cet au moins un jeu de déflecteurs comprend une pluralité de déflecteurs annulaires, joints ensemble par des rails d'une manière substantiellement équidistante, et arrangés de façon substantiellement parallèle, de telle sorte qu'ils s'étendent radialement vers l'intérieur depuis le côté du récipient.

9. Un appareil tel que décrit dans n'importe quelle revendication précédente, dans lequel le moyen de commande est un servo-amplificateur.

10. Un procédé pour appliquer un mouvement oscillatoire sur une substance au moins à l'intérieur d'un récipient en utilisant au moins un élément, le procédé comprenant les étapes de :
générer un signal de commande ayant une forme d'onde prédéterminée commandable ;
appliquer le signal de commande sur cet au moins un élément ; et
déplacer cet au moins un élément pour appliquer le mouvement oscillatoire sur cette au moins une substance
dans lequel le déplacement de cet au moins un élément est déterminé par le signal de commande.

11. Un procédé tel que décrit dans la revendication 10, comprenant l'étape supplémentaire de faire basculer le signal de commande appliqué sur cet au moins un élément vers une forme d'onde commandable alternative afin d'appliquer un mouvement oscillatoire alternatif sur cette au moins une substance.

12. Un procédé tel que décrit dans la revendication 11, dans lequel le signal de commande est basculé vers une forme d'onde alternative en réponse à des conditions à l'intérieur du récipient.

13. Un procédé tel que décrit dans les revendications 10 à 12,
dans lequel le signal de commande peut être adapté afin de produire une forme d'onde d'amplitude constante ou variable.

14. Un procédé tel que décrit dans les revendications 10 à 13,
dans lequel le signal de commande peut être adapté afin de produire une forme d'onde de fréquence constante ou variable.

15. Un procédé tel que décrit dans les revendications 10 à 14,
dans lequel le signal de commande peut être adapté afin de produire une forme d'onde de période constante ou variable.

16. Un procédé tel que décrit dans les revendications 10 à 15,
dans lequel lors de l'ajustement de l'amplitude dans un appareil à fonctionnement discontinu comprenant un dernier déflecteur, le dernier déflecteur est automatiquement réaligné par rapport au fond de l'appareil.
